Europäisches Patentamt

(19) European Patent Office

Office européen des brevets

(11) Numéro de publication : **0 172 071**
**B1**

(12) # FASCICULE DE BREVET EUROPÉEN

(45) Date de publication du fascicule du brevet :
02.12.87

(51) Int. Cl.⁴ : **B 64 C 25/46**, B 60 T 8/32

(21) Numéro de dépôt : **85401432.1**

(22) Date de dépôt : **12.07.85**

(54) **Système pour le freinage d'un véhicule, notamment d'un aéronef roulant sur le sol, et régulateur d'antipatinage pour ce système.**

(30) Priorité : 25.07.84 FR 8411805

(43) Date de publication de la demande :
19.02.86 Bulletin 86/08

(45) Mention de la délivrance du brevet :
02.12.87 Bulletin 87/49

(84) Etats contractants désignés :
DE GB IT NL

(56) Documents cités :
EP-A- 0 149 801
DE-A- 2 739 468
DE-A- 3 226 074
FR-A- 2 413 244
GB-A- 1 018 548
US-A- 3 915 508

(73) Titulaire : **AEROSPATIALE Société Nationale Industrielle**
**37, Boulevard de Montmorency**
**F-75781 Paris Cédex 16 (FR)**

(72) Inventeur : **Rolland, Pierre-Charles**
**23 Bld des Minimes**
**F-31200 Toulouse (FR)**
Inventeur : **Mottura, Alain**
**47 Bld. Riquet**
**31000 Toulouse (FR)**

(74) Mandataire : **Bonnetat, Christian et al**
**Cabinet PROPI Conseils 23 rue de Léningrad**
**F-75008 Paris (FR)**

Jouve, 18, rue St-Denis, 75001 Paris, France

## Description

La présente invention concerne un système pour le freinage d'un véhicule, notamment d'un aéronef roulant sur le sol, ainsi qu'un régulateur d'antipatinage pour ce système de freinage.

On sait que pour éviter le blocage des roues freinées, les systèmes de freinage d'aéronef comportent un régulateur d'antipatinage, permettant de réguler en glissement, c'est-à-dire en réalité à asservir en vitesse, les roues freinées. Un tel régulateur se comporte comme un filtre susceptible, au moins en partie, d'éliminer les signaux périodiques parasites tendant à nuire à la régulation et de renforcer les signaux favorables à celle-ci.

Dans les systèmes de freinage connus, le régulateur d'antipatinage est constitué par un dispositif analogique qui reçoit des signaux analogiques représentatifs, d'une part, de la vitesse d'une roue freinée et d'autre part, d'une vitesse de référence telle que la vitesse d'une roue non freinée et qui adresse un signal de commande à une servovalve électrohydraulique actionnant les freins. De tels régulateurs d'antipatinage analogiques doivent être adaptés à chaque type de frein ou de roue utilisé ; de plus, à cause de la dispersion des caractéristiques de leurs composants, ils nécessitent des réglages délicats. En outre, ils ne peuvent prendre en compte la totalité des paramètres intervenant au cours d'un freinage d'aéronef, sans une extrême complication matérielle.

Afin de remédier à ces inconvénients, il serait donc avantageux de remplacer ces régulateurs d'antipatinage analogiques, par des régulateurs d'antipatinage numériques qui pourraient être intégrés à un processeur. Cependant, quoique l'on connaisse actuellement des capteurs tachymétriques numériques, la réalisation numérique de régulateurs d'antipatinage soulève des difficultés techniques, car il n'est pas possible, comme on le verra ci-après de transposer purement et simplement en numérique les régulateurs d'antipatinage analogiques.

L'objet de l'invention est de permettre la réalisation d'un régulateur d'antipatinage numérique.

A cette fin, selon l'invention, le système pour le freinage d'un véhicule, notamment d'un aéronef roulant sur le sol, comportant un régulateur d'antipatinage évitant le blocage des roues freinées et recevant la différence des signaux délivrés par un capteur tachymétrique lié à une roue freinée et par un générateur de signal de référence, est remarquable en ce que ledit régulateur d'antipatinage est constitué par des moyens de calcul numérique susceptibles de fournir séquentiellement l'expression S égale à

$$K0 + \frac{K1}{1+t1\,p} + \frac{K2}{1+t2\,p} + \cdots + \frac{Kn}{1+tnp},$$

dans laquelle, K0, K1, ... Kn sont des constantes, t1, t2, ... tn des constantes de temps et p la variable de Laplace.

En effet, l'expérience a montré qu'un filtre numérique présentant une fonction de transfert constituée de l'expression ci-dessus procurait des résultats semblables à ceux des régulateurs d'antipatinage analogiques connus rappelés ci-dessus.

En pratique, d'ailleurs, l'expression S peut être limitée à quatre termes et elle est donc égale à

$$K0 + \frac{K1}{1+t1\,p} + \frac{K2}{1+t2\,p} + \frac{K3}{1+t3\,p}.$$

Si l'on compare le régulateur d'antipatinage analogique connu sous le nom de SPAD et le régulateur à fonction de transfert numérique à quatre termes selon l'invention, on peut déterminer les différentes constantes en vue de l'obtention de résultats semblables. Cette comparaison conduit à adopter les valeurs suivantes :

| | | |
|---|---|---|
| K0 = | 43,14 | t1 = 3 s |
| K1 = | 32 | t2 = 2 ms |
| K2 = | 4,44 | t3 = 1 ms |
| K3 = | — 56,08. | |

On remarque donc que les valeurs des constantes K0 à K3 sont élevées et que les valeurs des constantes de temps t2 et t3 sont très petites par rapport à la constante de temps t1.

Bien entendu, les moyens de calcul pourraient calculer les différents termes constituant la fonction de transfert à partir des constantes ki, ti et p, puis faire l'addition nécessaire. Cependant, afin d'alléger de tels calculs, il est préférable que lesdits moyens de calcul opèrent selon certains algorithmes permettant d'éviter ces calculs et fournissant des résultats identiques.

Par exemple, le terme

$$\frac{K1}{1-t1\,p}.$$

**0 172 071**

correspondant à la constante de temps t1 la plus élevée, peut être calculé suivant la méthode connue dite « de l'intégrateur » et de la « bilinéaire en z », qui présente l'avantage de donner, aussi bien en statique qu'en dynamique, des résultats très proches de la théorie.

De plus, les termes

$$\frac{K2}{1-t2p} \text{ et } \frac{K3}{1-t3p}.$$

correspondant aux constantes de temps t2 et t3 les plus faibles peuvent être calculées suivant la méthode dite la « moyenne glissante ». Selon cette méthode, chaque sortie $s_n$ de rang n, est égale à la demi-somme de l'entrée $e_n$ de rang n et de l'entrée $e_{n-1}$ de rang n—1. L'algorithme de calcul correspondant est donc très simple et se traduit par une mise en œuvre logicielle très aisée. Cet algorithme a une réponse fréquentielle équivalente à celle d'un filtre du premier ordre dont la constante de temps est égale à la moitié de la période d'échantillonnage.

La remarque concernant les valeurs des constantes permet de simplifier le fonctionnement des moyens de calcul numérique en choisissant un pas de calcul de base, par exemple 2 ms, pour calculer le terme

$$\frac{Ki}{1-tip}$$

correspondant à la constante de temps la plus faible et pour calculer les autres termes

$$\frac{Ki}{1+tip}$$

suivant un pas de calcul multiple du pas de calcul de base. Par exemple, le terme

$$\frac{K3}{1+t3p}$$

peut être calculé à chaque pas de calcul de base de 2 ms, alors que le terme

$$\frac{K2}{1+t2p}$$

peut n'être calculé qu'avec un pas de calcul de 4 ms (2 pas de calcul de base) et que le terme

$$\frac{K1}{1+t1p}$$

n'est calculé qu'avec un pas de calcul de 20 ms (10 pas de calcul de base).

Ainsi, lesdits moyens de calcul déterminent chaque terme de l'expression S, lui-même correspondant à un filtre élémentaire, à l'aide d'un algorithme représentatif de la fonction de transfert dudit filtre élémentaire.

De préférence, de façon à tenir compte du fait que les valeurs des constantes K0, K1, K2 et K3 sont élevées, il est avantageux que lesdits moyens de calcul numérique opèrent de la façon suivante :

a) calcul du terme

$$\frac{1}{1-t1p}.$$

puis multiplication par la constante K1, pour obtenir

$$\frac{K1}{1-t1p};$$

b) calcul du terme

$$\frac{1}{1-t2p}.$$

puis multiplication par le rapport

3

$$\frac{K2}{K3},$$

pour obtenir

$$\frac{K2}{K3} \cdot \frac{1}{1 - t2p}$$

c) calcul du terme

$$\frac{1}{1 + t3p};$$

d) calcul de la somme

$$S_1 = \frac{K0}{K3} + \frac{K2}{K3} \cdot \frac{1}{1 + t2p} + \frac{1}{1 + t3p}$$

e) multiplication de ladite somme $S_1$ par la constante K3 pour obtenir la somme $S_2$

$$S_2 = K0 + \frac{K2}{1 + t2p} + \frac{K3}{1 + t3p}$$

f) addition de

$$\frac{K1}{1 + t1p}$$

à ladite somme $S_2$ pour obtenir l'expression S cherchée.

La présente invention concerne de plus un régulateur d'antipatinage pour un système de freinage d'un véhicule, notamment d'un aéronef roulant sur le sol, destiné à éviter le blocage des roues freinées recevant la différence des signaux délivrés par un capteur tachymétrique lié à une roue freinée et par un générateur de signal de référence, ce régulateur étant remarquable en ce qu'il est constitué par des moyens de calcul numérique susceptibles de calculer séquentiellement l'expression

$$S = K0 + \frac{K1}{1 + t1p} + \frac{K2}{1 + t2p} + \cdots + \frac{Kn}{1 + tnp},$$

dans laquelle K0, K1 ... Kn sont des constantes, t1, t2, ... tn des constantes de temps et p la variable de Laplace.

Dans un mode de réalisation avantageux, ladite expression est égale à

$$S = K0 + \frac{K1}{1 + t1p} + \frac{K2}{1 + t2p} + \frac{K3}{1 + t3p}.$$

Pour son fonctionnement, le régulateur doit recevoir ladite différence de signaux sous forme numérique. Par suite, il peut être avantageux que le dispositif tachymétrique lié à la roue freinée et le générateur de signal de référence délivrent directement leurs signaux sous forme numérique. Toutefois, lesdits signaux peuvent se présenter sous forme analogique, à condition de subir une conversion analogique/numérique avant d'être introduits dans ledit régulateur.

Les figures du dessin annexé feront bien comprendre comment l'invention peut être réalisée.

La figure 1 est le schéma synoptique d'un système de freinage automatique, pourvu d'un régulateur d'antipatinage.

La figure 2 illustre l'architecture de calcul du régulateur d'antipatinage selon l'invention.

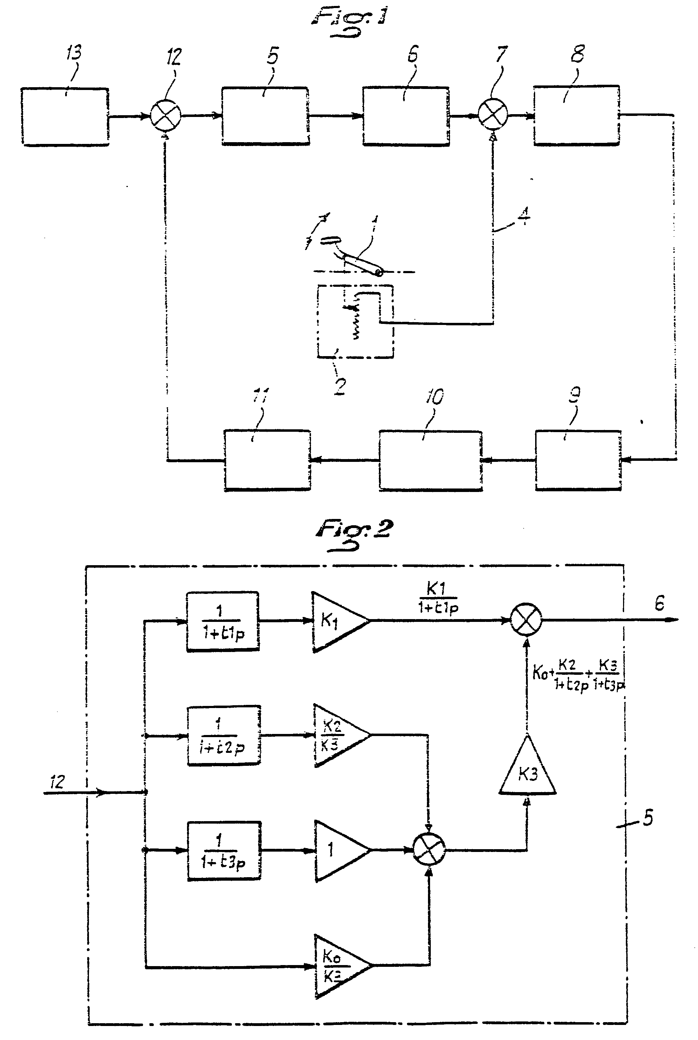

Le dispositif de régulation de freinage d'un véhicule, dont le schéma synoptique est représenté sur la figure 1, comporte un organe d'actionnement 1, par exemple une pédale, qui est associé à un transmetteur 2 pour délivrer un signal électrique de freinage sur une ligne 4. Ce dispositif de freinage comporte de plus un régulateur d'antipatinage 5 évitant le blocage de la roue freinée (non représentée) et monté dans une boucle d'asservissement formée par ledit dispositif de freinage.

Dans cette boucle d'asservissement, le régulateur 5 commande un générateur de courant 6. Le courant de sortie du générateur 6 est combiné, dans un soustracteur 7, au signal électrique de freinage provenant du transmetteur 2, pour fournir un signal de commande à une servovalve électrohydraulique 8. Celle-ci délivre au frein 9 une pression hydraulique permettant de freiner la roue commandée roulant sur le sol 10. Le résultat de l'action du frein dépend en grande partie des conditions de liaison entre la roue freinée et le sol, et ce résultat est donné par un dispositif tachymétrique 11, lié à ladite roue et fournissant à sa sortie un signal électrique représentatif de la vitesse instantanée de la roue freinée.

Ce dernier signal électrique est comparé, dans un soustracteur 12, à une vitesse de consigne ou de référence délivré par un générateur 13 (par exemple dispositif tachymétrique lié à une roue non freinée dudit véhicule, centrale inertielle, etc...).

Dans les dispositifs de freinage connus, dont le schéma synoptique est donné par la figure 1, le dispositif tachymétrique 11 et le générateur 13 de vitesse de consigne délivrent des fréquences représentatives à chaque instant de la vitesse du véhicule et de la vitesse de consigne, ces fréquences étant converties en tensions délivrées au soustracteur 12. Le régulateur d'antipatinage 5 est donc du type analogique.

Le rôle d'un tel régulateur d'antipatinage est de maintenir le signal d'erreur délivré par le soustracteur 12 aussi faible que possible.

Si l'on analyse ce signal d'erreur, on constate qu'il résulte d'une pluralité de signaux parasites de fréquences bien déterminées, dont au moins certains sont caractéristiques du véhicule, du type de frein, de la servovalve, etc.

Par suite, pour obtenir un asservissement de freinage aussi bon que possible, il est indispensable de filtrer lesdits signaux parasites.

Cette tache de filtrage est effectuée par ledit régulateur 5 qui se comporte comme un filtre.

Si l'on analyse mathématiquement l'action filtrante du régulateur d'antipatinage 5 connu, de type analogique, on s'aperçoit qu'il est équivalent à un filtre dont la fonction de transfert T est égale à :

$$T = \frac{(1 + tap)(1 + tbp)(1 + tcp)}{(1 + tdp)(1 + tep)(1 + tfp)}$$

expression dans laquelle ta, tb, tc, td, te et tf sont des constantes de temps et p la variable de Laplace.

Afin de pouvoir bénéficier, dans un système de freinage du type décrit ci-dessus, des avantages apportés par les techniques numériques (notamment la mise en œuvre des microprocesseurs), il serait avantageux de pouvoir réaliser le régulateur d'antipatinage 5 sous forme numérique, d'autant plus que l'on connaît actuellement des dispositifs tachymétriques susceptibles de délivrer des informations de vitesse sous forme numérique.

Cependant, si l'on désire transposer le filtre analogique en numérique, on se heurte à des difficultés insurmontables, dues à ce que :

— les différentes constantes de temps ta à tf sont toutes plus ou moins liées, de sorte que l'ajustage du filtrage est délicat ;

— les valeurs de ces constantes de temps sont très variables : de 1 ms à plusieurs secondes ; et

— la dynamique du filtre est importante, supérieure à 60 dB.

Pour surmonter ces difficultés, selon l'invention, on prévoit pour le régulateur d'antipatinage 5 une fonction de transfert qui se prête particulièrement bien à la réalisation numérique et dont l'expérience a montré qu'elle permettait des résultats semblables à ceux de la réalisation analogique.

Selon l'invention, on donne au régulateur d'antipatinage 5 la structure de moyens de calcul, avantageusement du type processeur, pouvant reproduire l'expression

$$K0 + \frac{K1}{1 + t1p} + \frac{K2}{1 + t2p} + \cdots + \frac{Kn}{1 + tnp},$$

ou plus simplement

$$K0 + \frac{K1}{1 + t1p} + \frac{K2}{1 + t2p} + \frac{K3}{1 + t3p}.$$

Comme l'illustre la figure 2, pour les raisons déjà indiquées, il est avantageux, lors du calcul de cette dernière expression :

— de calculer

$$\frac{1}{1 + t1p},$$

puis

$$\frac{K1}{1 + t1p}$$

— de calculer

$$\frac{1}{1 - t2p} .$$

puis

$$\frac{K2}{K3} \cdot \frac{1}{1 + t2p}$$

— de calculer

$$\frac{1}{1 + t3p}$$

— d'additionner algébriquement

$$\frac{K0}{K3} - \frac{K2}{K3} \cdot \frac{1}{1 + t2p} + \frac{1}{1 + t3p}$$

— de multiplier cette dernière expression par K3
— d'additionner enfin

$$\frac{K1}{1 + T1p} \text{ et } K0 + \frac{K2}{1 + t2p} + \frac{K3}{1 + t3p}$$

Le filtre numérique obtenu selon l'invention est plus rapide que le filtre analogique correspondant, ce qui se traduit par une régulation à basse vitesse nettement meilleure.

Les multiples possibilités de réglages du filtre numérique confèrent à celui-ci des caractéristiques de performances ou de régulation supérieures à celles du filtre analogique.

**Revendications**

1. Système pour le freinage d'un véhicule, notamment d'un aéronef roulant sur le sol, comportant un régulateur d'antipatinage (5) évitant le blocage des roues freinées et recevant la différence de signaux délivrés par un capteur tachymétrique (11) lié à une roue freinée et un générateur (13) de signal de références, caractérisé en ce que ledit régulateur d'antipatinage (5) est constitué par des moyens de calcul numérique susceptibles de calculer séquentiellement l'expression

$$S = K0 + \frac{K1}{1 + t1p} + \frac{K2}{1 + t2p} + \cdots + \frac{Kn}{1 + tnp} ,$$

dans laquelle K0, K1, ... Kn sont des constantes, t1, t2 ..., tn des constantes de temps et p la variation de Laplace.

2. Système de freinage selon la revendication 1, caractérisé en ce que l'expression est égale à

$$S = K0 + \frac{K1}{1 + t1p} + \frac{K2}{1 + t2p} + \frac{K3}{1 + t3p}$$

3. Système de freinage selon l'une des revendications 1 ou 2, caractérisé en ce que les termes

$$\frac{Ki}{1 + tip}$$

correspondant à des constantes de temps ti élevées sont calculés selon la méthode connue dite « de l'intégrateur ».

4. Système de freinage selon l'une des revendications 1 à 3, caractérisé en ce que les termes

$$\frac{Ki}{1 - tip}$$

correspondant à des constantes de temps ti faibles sont calculés selon la méthode connue dite « de la moyenne glissante ».

5. Système de freinage selon l'une des revendications 1 à 4, caractérisé en ce que le ou les termes du type

$$\frac{K_i}{1 - t_i p}$$

correspondant à une constante de temps ti faible sont calculés suivant un pas de calcul de base, alors que les autres termes

$$\frac{K_i}{1 - t_i p}$$

correspondant à des constantes de temps plus élevées sont calculés suivant un pas de calcul multiple du pas de calcul de base.

6. Système de freinage selon l'une des revendications 2 à 5, caractérisé en ce que les diverses constantes ont les valeurs suivantes :

$K0 = 43,14$      $t1 = 3$   s
$K1 = 32$      $t2 = 2$   ms
$K2 = 4,44$      $t3 = 1$   ms
$K3 = -56,08$

7. Système de freinage selon l'une des revendications 2 à 6, caractérisé en ce que lesdits moyens de calcul numérique opèrent de la façon suivante :

    a) calcul du terme

$$\frac{1}{1 + t_1 p},$$

puis multiplication par la constante K1, pour obtenir

$$\frac{K1}{1 + t_1 p};$$

    b) calcul du terme

$$\frac{1}{1 + t_2 p},$$

puis multiplication par le rapport

$$\frac{K2}{K3},$$

pour obtenir

$$\frac{K2}{K3} \cdot \frac{1}{1 + t_2 p}$$

    c) calcul du terme

$$\frac{1}{1 - t_3 p};$$

    d) calcul de la somme

$$S_1 = \frac{K0}{K3} + \frac{K2}{K3} \cdot \frac{1}{1 - t_2 p} + \frac{1}{1 + t_3 p}$$

    e) multiplication de ladite somme $S_1$ par la constante K3 pour obtenir la somme $S_2$

$$S_2 = K0 - \frac{K2}{1 - t_2 p} - \frac{K3}{1 - t_3 p}$$

    f) addition de

$$\frac{K1}{1 - t_1 p}$$

à ladite somme S1 pour obtenir l'expression cherchée.

8. Régulateur d'antipatinage pour un système de freinage d'un véhicule, notamment d'un aéronef roulant sur le sol, destiné à éviter le blocage des roues freinées et recevant la différence des signaux délivrés par un capteur tachymétrique lié à une roue freinée et par un générateur de signal de référence, caractérisé en ce qu'il est constitué par des moyens de calcul numérique susceptibles de calculer séquentiellement l'expression

$$S = K0 + \frac{K1}{1+t1p} + \frac{K2}{1+t2p} + \cdots + \frac{Kn}{1+tnp}.$$

9. Régulateur selon la revendication 8, caractérisé en ce que lesdits moyens de calcul numérique délivrent l'expression

$$S = K0 + \frac{K1}{1+t1p} + \frac{K2}{1+t2p} + \frac{K3}{1+t3p}$$

10. Régulateur selon l'une des revendications 8 ou 9, caractérisé en ce que lesdits moyens de calcul numérique calculent chaque terme de ladite expression correspondant lui-même à un filtre élémentaire selon un algorithme représentatif de la fonction de transfert dudit filtre élémentaire.

**Claims**

1. System for braking a vehicle, more especially an aircraft travelling over the ground, comprising an anti-locking regulator (5) for preventing the braked wheels from locking and receiving the difference of signals delivered by a tachometric sensor (11) coupled to a braked wheel and a reference signal generator (13), characterized in that said anti-locking regulator (5) is formed by digital calculation means capable of sequentially calculating the expression

$$S = K0 + \frac{K1}{1+t1p} + \frac{K2}{1+t2p} + \cdots + \frac{Kn}{1+tnp},$$

in which K0, K1, ... Kn are constants, t1, t2 ... tn are time constants and p Laplace's variable.

2. Braking system as claimed in claim 1, characterized in that the expression is equal to

$$S = K0 + \frac{K1}{1+t1p} + \frac{K2}{1+t2p} + \frac{K3}{1+t3p}$$

3. Braking system as claimed in claim 1 or 2, characterized in that the terms

$$\frac{Ki}{1+tip}$$

corresponding to high time constants ti are calculated in accordance with the so-called « integrator » method.

4. Braking system as claimed in any one of claims 1 to 3, characterized in that the terms

$$\frac{Ki}{1+tip}$$

corresponding to low time constants ti are calculated according to the so-called « sliding mean » method.

5. Braking system as claimed in any one of claims 1 to 4, characterized in that the term or terms of type

$$\frac{Ki}{1+tip}$$

corresponding to a small time constant ti are calculated in accordance with a basic calculation pitch, whereas the other terms

$$\frac{Ki}{1+tip}$$

corresponding to higher time constants are calculated in accordance with a calculating pitch a multiple of the basic calculation pitch.

6. Braking system as claimed in any one of claims 2 to 5, characterized in that the different constants have the following values :

| | | | |
|---|---|---|---|
| K0 = | 43.14 | t1 = | 3 s |
| K1 = | 32 | t2 = | 2 ms |
| K2 = | 4.44 | t3 = | 1 ms |
| K3 = | — 56.08 | | |

7. Braking system as claimed in any one fo claims 2 to 6, characterized in that said digital calculation means operate in the following way :
a) calculation of the term

$$\frac{1}{1+t1p}.$$

the multiplication by the constant K1, so as to obtain

$$\frac{K1}{1+t1p};$$

b) calculation of ther term

$$\frac{1}{1+t2p},$$

the multiplication by the ration

$$\frac{K2}{K3},$$

so as to obtain

$$\frac{K2}{K3}\cdot\frac{1}{1+t2p};$$

c) calculation of the term

$$\frac{1}{1+t3p};$$

d) calculation of the sum

$$S_1 = \frac{K0}{K3}+\frac{K2}{K3}\cdot\frac{1}{1+t2p}+\frac{1}{1+t3p}$$

e) multiplication of said sum $S_1$ by the constant K3 so as to obtain the sum $S_2$

$$S_2 = K0 + \frac{K2}{1+t2p}+\frac{K3}{1+t3p}$$

f) addition of

$$\frac{K1}{1+t1p}$$

to said sum $S_1$ so as to obtain the desired expression.

8. Anti-locking regulator for a braking system of a vehicle, more especially of an aircraft travelling over the ground so as to avoid locking of the braked wheels and receiving the difference of the signals delivered by a tachometric sensor coupled to a braked wheel and by a reference signal generator, characterized in that it is constituted by digital calculation means capable of sequentially calculating the expression

$$S = K0 - \frac{K1}{1-t1p}-\frac{K2}{1-t2p}-\cdots-\frac{Kn}{1-tnp}.$$

9

9. Regulator as claimed in claim 8, characterized in that said digital calculating means deliver the expression

$$S = K0 + \frac{K1}{1+t1p} + \frac{K2}{1-t2p} + \frac{K3}{1+t3p}$$

10. Regulator as claimed in claim 8 or 9, characterized in that said digital calculation means calculate each term of said expression itself corresponding to an elementary filter according to an algorithm representative of the transfer function of said elementary filter.

**Patentansprüche**

1. System zum Abbremsen eines Fahrzeugs, insbesondere eines auf dem Boden rollenden Flugzeugs, mit einem anti-Schleuder-Regler (5), der das Blockieren der gebremsten Räder verhindert und der die Differenz von Signalen empfängt, die von einem mit einem gebremsten Rad verbundenen Tachometer-Aufnehmer (11) und einem Generator (13) von Referenz-Signalen abgegeben werden, dadurch gekennzeichnet, daß der Anti-Schleuder-Regler (5) aus numerischen Berechnungsmitteln zusammengesetzt ist, die in Folge die Berechnung des Ausdrucks

$$S = K0 + \frac{K1}{1+t1p} + \frac{K2}{1+t2p} + \cdots + \frac{Kn}{1+tnp},$$

erlauben, wobei K0, K1, ... Kn Konstanten sind, t1, t2, ..., tn Zeitkonstanten und p die Laplace-Variation.

2. System zur Abbremsen nach Anspruch 1, dadurch gekennzeichnet, daß der Ausdruck gleich

$$S = K0 + \frac{K1}{1+t1p} + \frac{K2}{1+t2p} + \frac{K3}{1+t3p}$$

ist.

3. System zum Abbremsen nach einem der Ansprüche 1 oder 2, dadurch gekennzeichnet, daß die Ausdrücke

$$\frac{Ki}{1+tip}$$

entsprechend erhöhten Zeitkonstanten ti nach der unter « Integrator » bekannten Methode berechnet werden.

4. System zum Abbremsen nach einem der Ansprüche 1 bis 3, dadurch gekennzeichnet, daß die Ausdrücke

$$\frac{Ki}{1+tip}$$

entsprechend niedrigen Zeitkonstanten ti nach der unter « gleitender Mittelwert » bekannten Methode berechnet werden.

5. System zum Abbremsen nach einem der Ansprüche 1 bis 4, dadurch gekennzeichnet, daß der oder die Ausdrücke der Form

$$\frac{Ki}{1+tip}$$

entsprechend einer niedrigen Zeitkonstante ti gemäß einem Grundrechenschritt berechnet werden, während die anderen Ausdrücke

$$\frac{Ki}{1+tip}$$

entsprechend höheren Zeitkonstanten gemäß einem Mehrfach-Rechenschritt des Grundrechenschritts berechnet werden.

6. System zum Abbremsen nach einem der Ansprüche 2 bis 5, dadurch gekennzeichnet, daß die diversen Konstanten folgende Werte einnehmen :

| | | | |
|---|---|---|---|
| K0 = | 43,14 | t1 = 3 | s |
| K1 = | 32 | t2 = 2 | ms |

K2 = 4,44  
K3 = — 56,08

t3 = 1 ms

7. System zum Abbremsen nach einem der Ansprüche 2 bis 6, dadurch gekennzeichnet, daß die numerischen Berechnungsmittel in folgender Weise arbeiten:

a) Berechnung des Ausdrucks

$$\frac{1}{1 - t1\,p} \cdot$$

dann Multiplikation mit der Konstanten K1, man erhält

$$\frac{K1}{1 - t1\,p};$$

b) Berechnung des Ansdrucks

$$\frac{1}{1 - t2\,p} \cdot$$

dann Multiplikation mit dem Verhältnis

$$\frac{K2}{K3},$$

man erhält

$$\frac{K2}{K3} \cdot \frac{1}{1 - t2\,p}$$

c) Berechnung des Ausdrucks

$$\frac{1}{1 + t3\,p};$$

d) Berechnung der Summe

$$S_1 = \frac{K0}{K3} + \frac{K2}{K3} \cdot \frac{1}{1 - t2\,p} + \frac{1}{1 + t3\,p}$$

e) Multiplikation der Summe $S_1$ mit der Konstanten K3, man erhält die Summe $S_2$

$$S_2 = K0 + \frac{K2}{1 - t2\,p} + \frac{K3}{1 + t3\,p}$$

f) Addition von

$$\frac{K1}{1 - t1\,p}$$

zur Summe S1, man erhält den gesuchten Ausdruck.

8. Anti-Schleuder-Regler für ein System zum Abbremsen eines Fahrzeugs, insbesondere eines auf dem Boden rollenden Flugzeugs, vorgesehen zum Verhindern des Blockierens der gebremsten Räder und der die Differenz von Signalen empfängt, die von einem mit einem gebremsten Rad verbundenen Tachometer-Aufnehmer und von einem Generator eines Referenz-Signals abgegeben werden, dadurch gekennzeichnet, daß er aus numerischen Berechnungsmitteln Zusammengesetzt ist, die in Folge die Berechnung des Ausdrucks

$$S = K0 - \frac{K1}{1 - t1\,p} - \frac{K2}{1 - t2\,p} - \cdots \frac{Kn}{1 - tn\,p}$$

erlauben.

9. Regler nach Anspruch 8, dadurch gekennzeichnet, daß die numerischen Berechnungsmittel den Ausdruck

11

**0 172 071**

$$S = K0 - \frac{K1}{1 - t1\,p} - \frac{K2}{1 - t2\,p} - \frac{K3}{1 - t3\,p}$$

liefern.

10. Regler nach einem der Ansprüche 8 oder 9, dadurch gekennzeichnet, daß die numerischen Berechnungsmittel jeden Term des Ausdrucks, der selbst einem Elementarfilter entspricht, gemäß einem repräsentativen Algorithmus für die Übertragungsfunktion des Elementarfilters berechnen.

**0 172 071**

## Fig. 1

## Fig. 2

1